# EUROPÄISCHE PATENTSCHRIFT

(11) **EP 3 115 756 B1**
(45) Veröffentlichungstag und Bekanntmachung des Hinweises auf die Patenterteilung: **07.03.2018**
(21) Anmeldenummer: 16173952.9
(22) Anmeldetag: 10.06.2016
(51) Int. Cl.: G01K 1/08

(54) **KOCHSENSOR**
COOKING SENSOR
CAPTEUR DE CUISSON

(30) Priorität: 08.07.2015 DE 102015212774
(43) Veröffentlichungstag der Anmeldung: 11.01.2017
(73) Patentinhaber: BSH Hausgeräte GmbH, 81739 München (DE)
(72) Erfinder: Franco Gutierrez, Carlos, 50017 Zaragoza (ES); Marzo Alvarez, Teresa Del Carmen, 50012 Zaragoza (ES); Schemmerer, Roman, 83349 Palling (DE); Vormann, Ingo, 83413 Fridolfing (DE)

(56) Entgegenhaltungen:
- WO-A1-2013/150397
- CN-Y- 2 800 244
- JP-A- H07 260 587
- US-A1- 2011 013 669

## Beschreibung

Die Erfindung betrifft einen abnehmbaren Kochsensor, aufweisend ein Gehäuse mit einer Basis und einem abnehmbaren Deckel, wobei die Basis zur Befestigung an einer Wand eines Kochgeschirrs vorgesehen ist und an der Basis ein Kochgeschirr-Temperatursensor, eine Datenverarbeitungseinrichtung und eine Datenübertragungseinrichtung vorhanden sind. Die Erfindung betrifft auch ein System, das ein Induktionskochgerät und einen Kochsensor aufweist. Die Erfindung ist insbesondere vorteilhaft anwendbar auf Kochsensoren für den Haushaltsbereich.
Ein Kochsensor der betreffenden Art ist dazu vorgesehen, lösbar an einer Seitenwand eines Kochgeschirrs angebracht zu werden. Je näher der Kochsensor an einem Boden des Kochgeschirrs angeordnet ist, desto genauer stimmt in der Regel die gemessene Kochgeschirr-Temperatur mit einer Gargut-Temperatur eines sich in dem Kochgeschirr befindlichen Garguts überein. Je näher sich der Kochsensor jedoch an dem Topfboden befindet, desto stärker wird er bei einem Induktionskochgerät durch dessen induktives magnetisches Wechselfeld ("Induktionsfeld") nachteilig beeinflusst, z.B. erwärmt.
WO 2013/150397 A1 offenbart einen Topfdeckel mit einer Sensoreinrichtung, insbesondere an einem Deckel eines Haushaltstopfs, wobei die Sensoreinrichtung an dem Topfdeckel angebracht ist. Es ist gemäß der bevorzugten Ausführungsform vorgesehen, dass eine Verbindung zwischen der Sensoreinrichtung und dem Deckel des Topfes als eine magnetische Verbindung ausgebildet ist.
Es ist die **Aufgabe** der vorliegenden Erfindung, die Nachteile des Standes der Technik zumindest teilweise zu überwinden und insbesondere eine Möglichkeit zum verbesserten Einsatz eines abnehmbaren Kochsensors zusammen mit einem Induktionskochgerät bereitzustellen.

Diese Aufgabe wird gemäß den Merkmalen des unabhängigen Anspruches gelöst. Bevorzugte Ausführungsformen sind insbesondere den abhängigen Ansprüchen entnehmbar. Die Aufgabe wird gelöst durch einen abnehmbaren Kochsensor nach Anspruch 1. Diese Ausgestaltung weist den Vorteil auf, dass so ein Eindringen des Induktionsfelds bzw. von Induktionsstrahlung in den durch den Deckel überdeckten Raum des Kochsensors wirksam verhindert werden kann. Beispielsweise lässt sich so auch ein seitlich an dem Kochsensor anliegendes Induktionsfeld, das dort besonders stark ausgeprägt sein kann, effektiv abschirmen. Da die Basis dem Kochgeschirr zugewandt ist, tritt darüber praktisch keine Induktionsstrahlung in den Kochsensor ein. Somit kann der Kochsensor auch bodennah bzw. nahe an einem Induktionskochfeld angebracht werden. Dies gilt insbesondere für den Fall, dass die Wand des Kochgeschirrs, an dem der Kochsensor angebracht ist, aus einem für Induktionswellen undurchdringlichen Material, z.B. Metall, besteht. Denn dann kann die Abschirmung zusammen mit der Wand des Kochgeschirrs einen für das Induktionsfeld praktisch allseitig abgeschirmten Innenraum des Kochsensors bereitstellen. Auch kann die Basis so ausgebildet sein, das sie für das Induktionsfeld praktisch undurchdringlich ist.
Der Kochsensor kann beispielsweise dergestalt zur abnehmbaren Befestigung an dem Kochgeschirr ausgebildet sein, dass er auf das Kochgeschirr oder auf einen mit dem Kochgeschirr insbesondere fest verbundenen Adapter aufgeklemmt oder aufgerastet werden kann. Es ist eine besonders einfache und vielfältig einsetzbare Weiterbildung, dass der Kochsensor mindestens einen Magneten zur lösbaren magnetischen Befestigung an dem Kochgeschirr aufweist. Der mindestens eine Magnet kann z.B. an der Basis des Kochsensors angeordnet sein.
Das Kochgeschirr kann insbesondere ein Kochgefäß wie ein Kochtopf, eine Pfanne, ein Bräter usw. sein.
Der Kochgeschirr-Temperatursensor ist insbesondere dazu eingerichtet und angeordnet, die Kochgeschirr-Temperatur an der Wand des Kochgeschirrs berührend oder berührungslos abzufühlen bzw. zu messen. Die Kochgeschirr-Temperatur kann ein Maß für eine Gartemperatur eines in dem Kochgeschirr befindlichen Garguts sein.

Es ist eine Weiterbildung davon, dass der Kochgeschirr-Temperatursensor ein IR-Sensor ist. Dies ermöglicht eine einfache berührungslose Messung oder Abfühlung der Kochgeschirr-Temperatur. Der IR-Sensor kann insbesondere ein Thermopile sein oder einen Thermopile aufweisen. Der IR-Sensor kann in einer Weiterbildung digitalisierte und ggf. bereits vorverarbeitete (z.B. kalibrierte) Temperaturwerte ausgeben. Das Blickfeld des IR-Sensors ist insbesondere auf eine vorgesehene Position der Wand des Kochgeschirrs gerichtet. Dazu kann die Basis des Kochsensors ein offenes oder ein mit einer IRdurchlässigen Scheibe bedecktes Fenster aufweisen.

Jedoch kann der Kochgeschirr-Temperatursensor in einer anderen Weiterbildung auch als ein Kontaktsensor ausgebildet sein, der zur Temperaturmessung in Kontakt mit der Wand des Kochgeschirrs stehen sollte.

Es ist eine Weiterbildung, dass der Kochgeschirr-Temperatursensor mit der Datenverarbeitungseinrichtung verbunden ist und die Datenverarbeitungseinrichtung mit der Datenübertragungseinrichtung verbunden ist. Die Datenverarbeitungseinrichtung kann also dem Kochgeschirr-Temperatursensor und der Datenübertragungseinrichtung zwischengeschaltet sein.

Die Datenübertragungseinrichtung ist insbesondere dazu eingerichtet, von der Datenverarbeitungseinrichtung empfangene Daten drahtlos auszusenden - z.B. in Form von Datenübertragungssignalen - und ggf. auch Daten drahtlos zu empfangen, z.B. von einem Kochgerät.

Die Datenverarbeitungseinrichtung ist insbesondere dazu eingerichtet, von dem Kochgeschirr-Temperatursensor gemessene Messdaten zu verarbeiten und sie dann an die Datenübertragungseinrichtung zu liefern. Das Verarbeiten der Messdaten kann ein Formatieren auf eine durch die Datenübertragungseinrichtung nutzbare Datenstruktur umfassen. Das Verarbeiten der Messdaten kann auch ein Berechnen von aus den Messdaten abgeleiteten Temperaturwerten umfassen. Die Datenverarbeitungseinrichtung kann eine Elektronik sein oder aufweisen, z.B. umfassend mindestens einen Mikroprozessor, ASIC, FPGA usw.
Der Deckel kann aus Kunststoff bestehen oder zumindest einen Grundkörper aus Kunststoff aufweisen.

Es ist eine erfindungsgemäße Ausgestaltung, dass die metallische Abschirmung ein innenseitig mit dem Deckel stoffschlüssig verbundener Metallkörper ist. Dies ergibt den Vorteil, dass ein Nutzer bei einem Abnehmen des Deckels von der Basis und bei einem folgenden Wiederaufsetzen des Deckels nur ein Teil handzuhaben braucht. Unter einem Metallkörper kann insbesondere ein separat hergestelltes Bauteil verstanden werden, das an dem Deckel befestigt wird. Der Metallkörper ist insbesondere selbsttragend. Die Verwendung eines Metallkörpers als Abschirmung bzw. als Abschirmelement weist den Vorteil auf, dass so auf preiswerte Weise eine robuste Abschirmung bereitgestellt wird, die zudem eine so große Dicke aufweist, dass sie selbst durch das Induktionsfeld nicht übermäßig aufgeheizt wird. Die als Metallkörper ausgebildete Abschirmung kann aufgrund ihrer ausreichend großen Masse und ihrer großen Oberfläche auch als Wärmesenke, insbesondere als Kühlkörper, verwendet werden. Dadurch ist ein solcher Kochsensor auch besonders vorteilhaft für Kochstellen einsetzbar, die Widerstandsheizkörper aufweisen.
Jedoch ist es grundsätzlich auch möglich, den Deckel innenseitig zu metallisieren, beispielsweise durch Aufbringen einer Schicht aus Metall, insbesondere aus Aluminium.

Es ist noch eine erfindungsgemäße Ausgestaltung, dass die Datenübertragungseinrichtung dazu eingerichtet ist, Funkwellen oder Funksignale zur Datenübertragung zu nutzen. Dies weist den Vorteil auf, dass eine sichere Datenübertragung auch außerhalb einer Sichtlinie zwischen Sender und Empfänger möglich ist. Zudem lässt sich eine hohe Datenübertragungsrate erreichen. Darüber hinaus sind auf Funk basierende Datenübertragungseinrichtungen preiswert verfügbar. Die Datenübertragungseinrichtung kann insbesondere als ein Funkmodul vorliegen, z.B. als ein Bluetooth-Modul.
Jedoch ist grundsätzlich auch eine andere Art der- insbesondere drahtlosen - Datenübertragung möglich, beispielsweise auf der Grundlage von Infrarotstrahlung.

Für den Fall, dass die Datenübertragungseinrichtung dazu eingerichtet ist, Funkwellen bzw. Funksignale zur Datenübertragung zu nutzen, ist es eine weitere Ausgestaltung, dass deren Frequenz ("Funkfrequenz") sich von einer Frequenz ("Induktionsfrequenz") eines Induktionsfelds zur Erzeugung einer Induktionserwärmung des Kochgeschirrs erheblich unterscheidet. So kann eine gegenseitige Beeinflussung von Funksignalen und Induktionsfeld sicher vermieden werden. Beispielsweise können Funksignale mit einer Funkfrequenz in einem ISM-Frequenzband von 433,05 MHz bis 434,79 MHz, in einem ISM-Frequenzband von 902 MHz bis 928 MHz oder in einem ISM-Frequenzband von 2,400 GHz bis 2,500 GHz verwendet werden. Die Datenübertragungseinrichtung kann z.B. gemäß dem Bluetooth-, insbesondere gemäß dem Bluetooth LE-, Funkstandard Daten übertragen (d.h., aussenden und ggf. auch empfangen). Dabei ist eine Datenübertragung gemäß dem Bluetooth LE-Funkstandard bei einer Frequenz von 2,4 GHz besonders vorteilhaft. Die Frequenz des Induktionsfelds liegt hingegen typischerweise zwischen 20 kHz und 50 kHz.

Für den Fall, dass sich die Funkfrequenz von der Induktionsfrequenz erheblich unterscheidet, ist es noch eine weitere Ausgestaltung, dass die Abschirmung zu dem Deckel hin eine Durchlassöffnung aufweist, die so dimensioniert und angeordnet ist, dass sie für die Funkwellen durchlässig und für das Induktionsfeld undurchlässig ist. Dadurch wird eine Ausstrahlung von Funksignalen aus dem Inneren des Kochsensors durch den Deckel hindurch ermöglicht, während Induktionsstrahlung nicht in das Innere des Kochsensors gelangen kann. Die Durchlassöffnung kann dazu insbesondere so groß sein, dass sie erheblich kleiner ist als die Wellenlänge der Induktionsstrahlung (z.B. um mindestens drei Größenordnungen kleiner), aber nicht mehr als eine Größenordnung kleiner als die Wellenlänge der Funkfrequenz ist. Eine Wellenlänge einer Induktionsstrahlung für eine Frequenz von 30 kHz liegt beispielsweise in einem Bereich von 10 Kilometern, während die Wellenlänge der 2,4-GHz-Funksignale in einem Bereich von 12 cm liegt. Folglich lässt sich eine Durchlassöffnung für Funksignale durchlässig und für Induktionsstrahlung undurchlässig ausgestalten, wenn sie beispielsweise einen maximalen Querschnitt in einer Größenordnung 1 cm oder mehr aufweist.

Es ist dazu eine besonders vorteilhafte Ausgestaltung, dass die Funkfrequenz um mindestens drei Größenordnungen (d.h., mindestens um einen Faktor 1000) höher ist als die Induktionsfrequenz.

Es ist ferner eine Ausgestaltung, dass die Abschirmung aus Aluminium mit einem Reinheitsgrad von mindestens 99 %, insbesondere von mindestens 99,5 %, besteht. Ein solches Aluminium weist eine sehr effektive Schirmungswirkung auf, ist leicht und preiswert sowie einfach in Form zu bringen. Zudem weist Aluminium eine hohe Wärmeleitfähigkeit auf. Jedoch können beispielsweise auch Aluminiumlegierungen verwendet werden, die aber typischerweise eine weniger effektive Abschirmwirkung zeigen, so dass die Abschirmung dann dicker sein muss bzw. eine größere Wandstärke aufweisen sollte.

Allgemein kann das Material der Abschirmung jedes geeignete elektrisch leitende Material sein, insbesondere ein Metall, beispielsweise aus oder mit Kupfer oder Stahl- bzw. Eisen. Auch kann das Aluminium als Schicht der Abschirmung vorliegen, so dass die Abschirmung z.B. als ein aluminiumbeschichtetes Blech ausgebildet sein kann.

Es ist auch eine Ausgestaltung, dass die Abschirmung ein Metallkörper ist und einen auf die Basis aufsetzbaren Aufsatzrand aufweist und an dem Aufsatzrand eine Dichtung angebracht ist. Dies ergibt den Vorteil, dass die Dichtung eine geringere Toleranz erreicht als beispielsweise für den Fall, dass die Dichtung an einem Deckel aus Kunststoff angebracht wäre, was eine Dichtwirkung erhöht. Der Aufsatzrand kann in einem eigenen Herstellungsschritt in die Abschirmung eingebracht werden, beispielsweise durch Drehen. Insbesondere das Drehen ermöglicht eine preiswerte Fertigung eines präzise bemaßten Aufsatzrands.

Es ist auch eine Ausgestaltung, dass an der Basis ein elektrischer Energiespeicher (z.B. eine Batterie oder ein Akkumulator usw.) vorhanden ist und an der Abschirmung ein Wärmeleitkörper befestigt ist, der bei aufgesetztem Deckel auf dem Energiespeicher oder auf einer Halterung für den Energiespeicher aufliegt. Dadurch kann eine Wärmeleitbrücke oder ein Wärmeleitpfad zwischen der Batterie und ggf. ihrer Halterung und dem Metallkörper hergestellt werden. Dadurch wiederum kann Wärme effektiv von der Batterie an den Metallkörper übertragen und so die Batterie gekühlt werden. Dies hat eine positive Auswirkung auf die Lebensdauer und auf die Kapazität der Batterie. Der Wärmeleitkörper kann beispielsweise eine Metallfolie, ein Wärmeleitkissen oder "Wärmepad" (z.B. ein TIM-Kissen) usw. sein.

Der Energiespeicher kann beispielsweise eine Knopfzellenbatterie sein. Die Halterung kann gleichzeitig als ein elektrischer Kontakt der Batterie dienen.

Es ist außerdem eine erfindungsgemäße Ausgestaltung, dass die Abschirmung eine hohlzylindrische Grundform aufweist, die an ihrer der Basis zugewandten Grundfläche offen ist und an ihrer der Basis abgewandten Grundfläche die Durchlassöffnung aufweist.
Die Aufgabe wird auch gelöst durch ein System, aufweisend ein Kochgerät, insbesondere Induktionskochgerät, und einen Kochsensor nach einem der vorhergehenden Ansprüche. Das Kochgerät kann mindestens eine Kochstelle und eine Datenübertragungseinrichtung zumindest zum drahtlosen Empfangen von Daten, welche die Kochgeschirr-Temperatur aufweisen, von mindestens einem Kochsensor wie oben beschrieben aufweisen.
Es ist eine Weiterbildung, dass das Kochgerät ein Haushaltsgerät ist. Es kann ein eigenständiges Induktionskochfeld sein oder eine Kombination aus einem Induktionskochfeld und einem Ofen (d.h., ein Herd) sein.
Die Kochgeschirr-Temperatur kann von dem Kochgerät dazu verwendet werden, eine Energiezufuhr zu mindestens einer Kochstelle zu steuern oder zu regeln.
Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in einer ersten Schrägdarstellung einen Kochsensor mit einer Basis, einer Abschirmung und einem Deckel in Explosionsdarstellung; und
- Fig.2: zeigt in einer ersten Schrägdarstellung den Kochsensor mit der Basis, der Abschirmung und dem Deckel in Explosionsdarstellung.

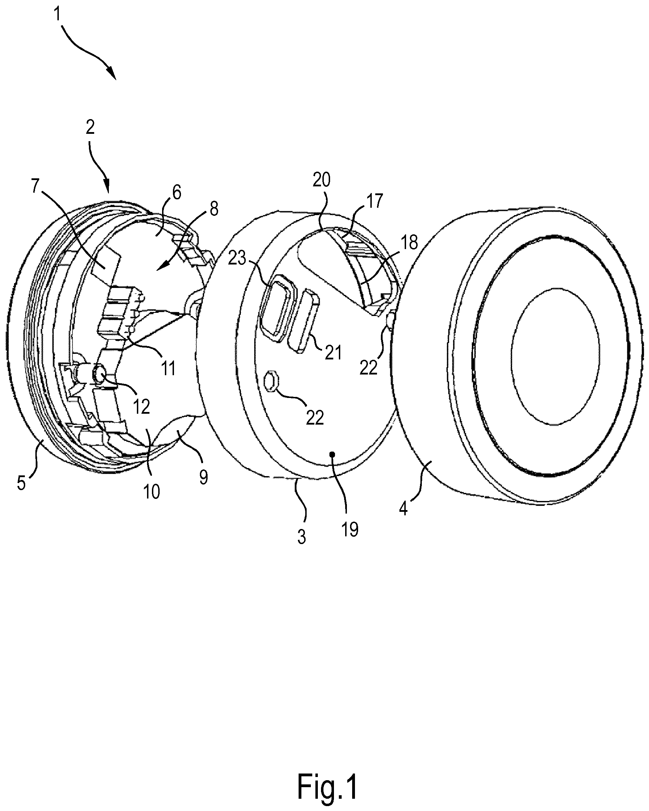

Fig.1 zeigt in einer ersten Schrägansicht einen Kochsensor 1 mit einer Basis 2, einer Abschirmung 3 in Form eines hochreinen Aluminiumkörpers (mit einem Reinheitsgrad von mindestens 99,5 %) und einem Deckel 4 in Explosionsdarstellung. In der ersten Schrägansicht sind die Innenseite der Basis 2, die Außenseite der Abschirmung 3 und die Außenseite des Deckels 4 gezeigt. Die Basis 2 und der Deckel 4 bilden zusammen ein Gehäuse 2, 4 des Kochsensors. Die Außenseite der Abschirmung 3 ist fest mit der Innenseite des Deckels 4 verklebt. Die Basis 2 ist zur Befestigung an einer Wand eines Kochgeschirrs (o. Abb.) vorgesehen.

Der Kochsensor 1 weist eine hohlzylindrische Grundform mit einer im Vergleich zu seinem Durchmesser geringen Höhe auf, was auch als eine "puckartige" Grundform bezeichnet werden kann. Die Basis 2 entspricht ungefähr einer dem Kochgeschirr zuzuwendenden Grundfläche des Kochsensors 1. Der Deckel 4 weist durch die dem Kochgeschirr abgewandte Grundfläche und die seitliche Mantelfläche eine zu der Basis 2 hin offene Schalenform auf. Die Abschirmung 3 weist eine zu dem Deckel 4 - insbesondere zu einer Innenseite des Deckels 4 - ähnliche Schalenform auf.

Die Basis 2 weist eine Kunststoffschale 5 als Träger der Basis 2 auf. In die Kunststoffschale 5 ist eine Platine 6 eingelegt, an welcher eine Datenverarbeitungseinrichtung in Form eines Mikrocontrollers 7 und eine Datenübertragungseinrichtung in Form eines Bluetooth-Senders oder Senderempfängers angeordnet sind. Von dem Bluetooth-Sender oder Senderempfänger ist hier nur die Fläche der Platine 6 gezeigt, an der eine zugehörige Leiterbahnantenne 8 angeordnet ist. Die Leiterbahnantenne 8 kann mit einem Bluetooth-Modul verbunden sein oder einen Teil des Bluetooth-Moduls darstellen. An der Platine 6 ist ferner eine Batterie 9 angeordnet, die in einer Batteriehalterung 10 entnehmbar eingeführt ist. Zudem sind an der Platine 6 mehrere i einer Reihe angeordnete Kontaktstifte 11 angeordnet.

Die Basis 2 weist ferner zwei Schraubendurchführungen 12 auf.

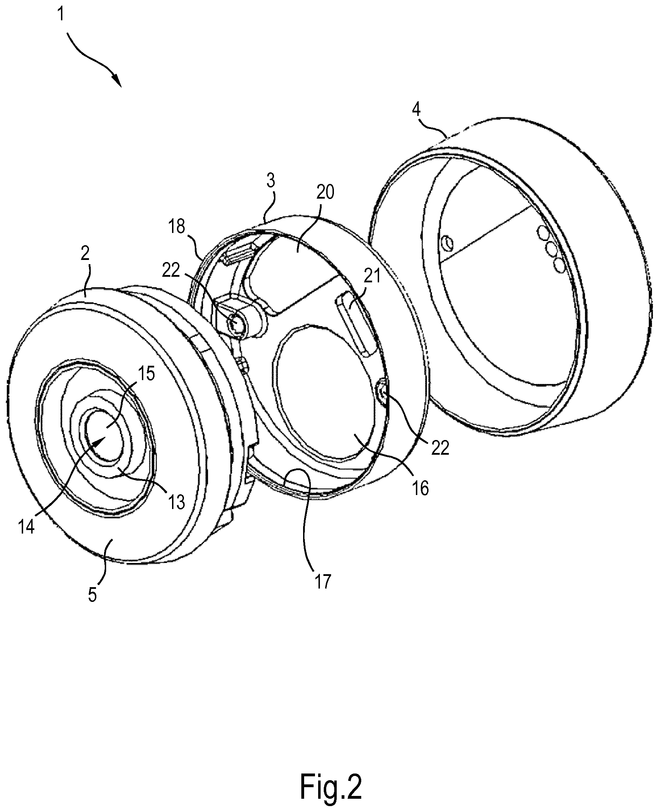

Fig.2 zeigt in der zweiten Schrägansicht die Außenseite der Basis 2, die Innenseite der Abschirmung 3 und die Innenseite des Deckels 4. An der Außenseite der Basis 2 ist ein Fenster 13 für einen Kochgeschirr-Temperatursensor in Form eines IR-Sensors 14 vorhanden, wobei in das Fenster 13 zum Schutz eine IR-durchlässige Abdeckung 15 eingesetzt ist.

Die Basis 2 weist zudem mindestens einen Permanentmagneten (o. Abb.) auf, mittels dessen die Basis 2 mit ihrer Außenseite auf ein Kochgeschirr lösbar aufsetzbar ist, d.h., dass der Kochsensor 1 einfach abnehmbar an dem Kochgeschirr anhaftbar ist.

An der Innenseite der Abschirmung 3 ist eine flächige Vertiefung 16 vorhanden, in welche ein Wärmeleitkissen (o. Abb.) eingesetzt werden kann. Ist der Deckel 4 mit der darin fest eingesetzten Abschirmung 3 auf der Basis 2 aufgesetzt, liegt das Wärmeleitkissen auf der Batterie 9 und/oder auf der Batteriehalterung 10 auf, um die Abschirmung 3 mit der Batterie 9 wärmetechnisch effektiv zu verbinden und so die Abschirmung 3 als Kühlkörper für die Batterie 9 zu nutzen.

Bezug nehmend auf Fig.1 und Fig.2 ist ein der Basis 2 zugewandter Aufsatzrand 17 mit einer Dichtung 18 versehen. Da der Aufsatzrand 17 gedreht worden ist und dadurch besonders maßgenau ist, kann bei aufgesetztem Deckel 4 ein Spalt zwischen der Basis 2 und der Abschirmung 3 bzw. des Deckels 4 besonders effektiv abgedichtet werden und eine besonders gute Dichtwirkung erreicht werden.

Der Deckel 4 kann an der Basis 2 durch Schrauben (o. Abb.) befestigt werden, welche von der Basis 2 aus durch die Schraubendurchführungen 12 bis zu dem Deckel 4 führbar sind. Bei geschlossenem Deckel 4 ist der durch die Basis 2 und die Abschirmung 3 gebildete Hohlraum oder Innenraum, in dem sich auch die Platine 6 mit dem Bluetooth-Sender oder Senderempfänger, einschließlich dessen Leiterbahnantenne 8, befindet, gegen ein von einem Induktionskochgerät erzeugbaren Induktionsfeld abgeschirmt. Um zu erreichen, dass bei geschlossenem Deckel 4 von der Leiterbahnantenne 8 abgestrahlte Funksignale aus dem Innenraum austreten können und ggf. Funksignale von außen zu der Leiterbahnantenne 8 gelangen können, weist die schalenförmige Abschirmung 3 in ihrer Deckfläche 19 eine Durchlassöffnung 20 auf. Die Durchlassöffnung 20 ist so dimensioniert und angeordnet, dass sie für die Funksignale bzw. Funkwellen durchlässig und für das Induktionsfeld undurchlässig ist. Dazu ist sie vorteilhafterweise mehrere Größenordnungen (mindestens um einen Faktor 1000) kleiner als eine Wellenlänge des Induktionsfelds aber nicht mehr als ca. eine Größenordnung (Faktor 10) kleiner als eine Wellenlänge der Funksignale. Die gezeigte Durchlassöffnung 20, die oberhalb der Leiterbahnantenne 8 angeordnet ist, weist einen größten Durchschnitt von mehr als 2 cm auf, was bei einer Wellenlänge der verwendeten 2,45-GHz-Funksignale von ca. 12 cm mehr als einem Zehntel dieser Wellenlänge entspricht. Somit können Funksignale ausreichend ungehindert durch die Durchlassöffnung 20 hindurchtreten. Da die Wellenlänge des Induktionsfelds mit typischerweise 2 bis 10 Kilometern oder mehr jedoch um mehr als fünf Größenordnungen größer ist als die Durchlassöffnung 20, können Induktionswellen praktisch nicht hindurchtreten.

Die Funksignale können beispielsweise die durch den IR-Sensor 14 gemessene Kochgeschirrtemperatur enthalten und dadurch an ein Induktionskochgerät (o. Abb.) übertragen. Das Induktionskochgerät kann die Kochgeschirrtemperatur dazu verwenden, um eine Leistung zu einer Induktionskochstelle, an der sich das mit dem Kochsensor 1 ausgerüstete Kochgeschirr befindet, zu regeln, beispielsweise auf eine Gartemperatur von in dem Kochgeschirr befindlichem Gargut oder auf die Kochgeschirrtemperatur.

In der Deckfläche 19 der Abschirmung 3 sind ferner eine Aussparung 21 für die Kontaktstifte 11, Aussparungen 22 für die Schraubendurchführungen 12 und eine Aussparung 23 zum Einlegen einer Platine (o. Abb.) eines deckelseitig ausgerichteten berührungsempfindlichen Tasters (o. Abb.) vorhanden.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Kochsensor
- 2: Basis
- 3: Abschirmung
- 4: Deckel
- 5: Kunststoffschale
- 6: Platine
- 7: Mikrocontroller
- 8: Leiterbahnantenne
- 9: Batterie
- 10: Batteriehalterung
- 11: Kontaktstift
- 12: Schraubendurchführung
- 13: Fenster
- 14: IR-Sensor
- 15: Abdeckung
- 16: Vertiefung
- 17: Aufsatzrand
- 18: Dichtung
- 19: Deckfläche
- 20: Durchlassöffnung
- 21: Aussparung
- 22: Aussparung
- 23: Aussparung

## Patentansprüche

1. Abnehmbarer Kochsensor (1), aufweisend
- ein Gehäuse (2, 4) mit einer Basis (2) und einem abnehmbaren Deckel (4), wobei
- die Basis (2) zur Befestigung an einer Seitenwand eines Kochgeschirrs vorgesehen ist und
- an der Basis (2) ein Kochgeschirr-Temperatursensor (14), eine Datenverarbeitungseinrichtung (7) und eine Datenübertragungseinrichtung (8) vorhanden sind,
**dadurch gekennzeichnet, dass**
- an dem Deckel (4) innenseitig eine metallische Abschirmung (3) angeordnet ist,
- die Datenübertragungseinrichtung (8) dazu eingerichtet ist, Funkwellen zur Datenübertragung zu nutzen, deren Funkfrequenz sich von einer Induktionsfrequenz eines Induktionsfelds zur Erzeugung einer Induktionserwärmung des Kochgeschirrs erheblich unterscheidet, dass
- die metallische Abschirmung (3) ein innenseitig mit dem Deckel (4) stoffschlüssig verbundener, selbsttragender Metallkörper ist, dass
- die metallische Abschirmung (3) zu dem Deckel (4) hin eine Durchlassöffnung (20) aufweist, die so dimensioniert und angeordnet ist, dass sie für die Funkwellen durchlässig und für das Induktionsfeld undurchlässig ist und dass
- die Abschirmung (3) eine hohlzylindrische Grundform aufweist, die an ihrer der Basis (2) zugewandten Grundfläche offen ist und an ihrer der Basis abgewandten Grundfläche (19) die Durchlassöffnung (20) aufweist.

2. Kochsensor (1) nach Anspruch 1, **dadurch gekennzeichnet, dass** die Funkfrequenz um mindestens drei Größenordnungen höher ist als die Induktionsfrequenz.

3. Kochsensor (1) nach einem der vorhergehenden Ansprüche, **dadurch gekennzeichnet, dass** die Abschirmung (3) aus Aluminium mit einem Reinheitsgrad von mindestens 99 % besteht.

4. Kochsensor (1) nach einem der vorhergehenden Ansprüche, **dadurch gekennzeichnet, dass** die Abschirmung (3) einen auf die Basis (2) aufsetzbaren Aufsatzrand (17) aufweist und an dem Aufsatzrand (17) eine Dichtung (18) angebracht ist.

5. Kochsensor (1) nach einem der vorhergehenden Ansprüche, **dadurch gekennzeichnet, dass** an der Basis (2) ein elektrischer Energiespeicher (9) vorhanden ist und an der Abschirmung (3) ein Wärmeleitkörper befestigt ist, der bei aufgesetztem Deckel (4) auf dem Energiespeicher (9) und/oder auf einer Halterung (10) für den Energiespeicher (9) aufliegt.

6. Kochsensor (1) nach Anspruch 5, **dadurch gekennzeichnet, dass** an einer Innenseite der Abschirmung (3) eine flächige Vertiefung (16) vorhanden ist, in welche ein als Wärmeleitkörper dienendes Wärmeleitkissen einsetzbar ist, wobei dann, wenn der Deckel (4) mit der darin eingesetzten Abschirmung (3) auf der Basis (2) aufsitzt, das Wärmeleitkissen auf dem Energiespeicher (9) und/oder auf der Halterung (10) für den Energiespeicher (9) aufliegt.

7. System, aufweisend ein Induktionskochgerät und einen Kochsensor (1) nach einem der vorhergehenden Ansprüche, wobei der Kochsensor (1) lösbar an einer Seitenwand eines Kochgeschirrs angebracht ist, indem er auf einen mit dem Kochgeschirr verbundenen Adapter aufgeklemmt oder aufgerastet ist.

## Claims

1. Removable cooking sensor (1), having
- a housing (2, 4) with a base (2) and a removable cover (4), wherein
- the base (2) is provided for attachment to a side wall of a cooking utensil and
- a cooking utensil temperature sensor (14), a data processing device (7) and a data transmission device (8) are present on the base (2),
**characterised in that**
- a metal shield (3) is arranged on the inside of the cover (4),
- the data transmission device (8) is designed to use radio waves for the data transmission, which have a radio frequency which differs considerably from an induction frequency of an induction field for generating induction heating of the cooking utensil, that
- the metal shield (3) is a self-supporting metal body connected inside to the cover (4) by a material bond, that
- the metal shield (3) has a discharge opening (20) through to the cover (4), which is dimensioned and arranged such that it is permeable to the radio waves and impermeable to the induction field and that
- the shield (3) has a hollow cylindrical basic shape which is open on its base area facing the base (2) and has the discharge opening (20) on its base area (19) facing away from the base.

2. Cooking sensor (1) according to claim 1, **characterised in that** the radio frequency is at least three orders of magnitude greater than the induction frequency.

3. Cooking sensor (1) according to one of the preceding claims, **characterised in that** the shield (3) consists of aluminium with a purity level of at least 99%.

4. Cooking sensor (1) according to one of the preceding claims, **characterised in that** the shield (3) has a mounting edge (17) that can be mounted onto the base (2) and a seal (18) is attached to the mounting edge (17).

5. Cooking sensor (1) according to one of the preceding claims, **characterised in that** an electrical energy store (9) is present on the base (2), and a heat-conducting body is fastened to the shield (3) and when the cover (4) is mounted lies on the energy store (9) and/or on a holder (10) for the energy store (9).

6. Cooking sensor (1) according to claim 5, **characterised in that** a planar depression (16) is present on an interior of the shield (3), into which a heat-conducting pad serving as a heat-conducting body can be inserted, wherein whenever the cover (4) with the shield (3) inserted therein is seated on the base (2), the heat-conducting pad lies on the energy store (9) and/or on the holder (10) for the energy store (9).

7. System, having an induction cooking device and a cooking sensor (1) according to one of the preceding claims, wherein the cooking sensor (1) is detachably attached to a side wall of a cooking utensil, by being clamped or latched onto an adapter connected to the cooking utensil.

## Revendications

1. Capteur de cuisson démontable (1), comprenant :
- un boîtier (2, 4) comportant un socle (2) et un couvercle démontable (4), dans lequel
- le socle (2) est prévu pour être fixé à une paroi latérale d'un ustensile de cuisson, et
- un capteur de température (14) d'ustensile de cuisson, un dispositif de traitement de données (7) et un dispositif de transmission de données (8) sont disposés sur le socle (2),
**caractérisé en ce que**
- un blindage métallique (3) est disposé sur le couvercle (4) au côté intérieur,
- le dispositif de transmission de données (8) est conçu pour utiliser des ondes radio pour transmettre des données, dont la fréquence se différencie notablement d'une fréquence d'induction d'un champ d'induction destiné à produire un chauffage par induction de l'ustensile de cuisson,
- le blindage métallique (3) est un corps métallique autonome, relié par complémentarité de matière au côté intérieur du couvercle (4),
- le blindage métallique (3) comporte au côté du couvercle (4) une ouverture de passage (20), qui est dimensionnée et agencée de telle sorte qu'elle est perméable aux ondes radio et imperméable au champ d'induction, et
- le blindage métallique (3) a une forme basique d'un cylindre creux, qui est ouvert au niveau de la surface de sa base faisant face au socle (2) et qui comprend l'ouverture de passage (20) sur la surface de sa base (19) opposée au socle.

2. Capteur de cuisson (1) selon la revendication 1, **caractérisé en ce que** la fréquence radio est plus élevée que la fréquence d'induction d'au moins trois ordres de grandeur.

3. Capteur de cuisson (1) selon l'une quelconque des revendications précédentes, **caractérisé en ce que** le blindage (3) est composé d'aluminium ayant un degré de pureté d'au moins 99 %.

4. Capteur de cuisson (1) selon l'une quelconque des revendications précédentes, **caractérisé en ce que** le blindage (3) comprend une bordure de couronne (17) pouvant être posée sur le socle (2) et un joint (18) est inséré sur la bordure de couronne (17).

5. Capteur de cuisson (1) selon l'une quelconque des revendications précédentes, **caractérisé en ce qu'**un accumulateur d'énergie électrique (9) est disposé sur le socle (2) et un corps thermoconducteur est fixé au blindage (3), ledit corps thermoconducteur s'appuyant sur l'accumulateur d'énergie (9) à couvercle (4) refermé et/ou sur un support (10) de l'accumulateur d'énergie (9).

6. Capteur de cuisson (1) selon la revendication 5, **caractérisé en ce qu'**un creux plan (16) est agencé sur le côté intérieur du blindage (3), dans lequel creux un rembourrage thermoconducteur servant de corps thermoconducteur peut être inséré, et, lorsque le couvercle (4) avec le blindage (3) qui y est inséré repose sur le socle (2), ledit rembourrage thermoconducteur appuie sur l'accumulateur d'énergie (9) et/ou sur le support (10) de l'accumulateur d'énergie (9).

7. Système comprenant un appareil de cuisson à induction et un capteur de cuisson (1) selon l'une quelconque des revendications précédentes, dans lequel le capteur de cuisson (1) est installé de façon amovible sur une paroi latérale d'un ustensile de cuisson en le serrant ou en l'encliquetant sur un adaptateur associé à l'ustensile de cuisson.
